Europäisches Patentamt

European Patent Office

Office européen des brevets

(11) Publication number: **0 257 876 B1**

# (12) EUROPEAN PATENT SPECIFICATION

(45) Date of publication of patent specification: **24.06.92** (51) Int. Cl.⁵: **C02F 5/12**

(21) Application number: **87306966.0**

(22) Date of filing: **06.08.87**

(54) **Polyacrylate blends as boiler scale inhibitors.**

(30) Priority: **15.08.86 US 897189**

(43) Date of publication of application:
**02.03.88 Bulletin 88/09**

(45) Publication of the grant of the patent:
**24.06.92 Bulletin 92/26**

(84) Designated Contracting States:
**AT BE CH DE ES FR GB GR IT LI LU NL SE**

(56) References cited:
FR-A- 2 415 079
GB-A- 1 216 781
GB-A- 1 440 403

(73) Proprietor: **CALGON CORPORATION
Route 60-Campbell's Run Road
Robinson Township Pennsylvania 15205(US)**

(72) Inventor: **Morse, Lewis D.
2464 Southvue Drive
Pittsburgh Pennsylvania 15241(US)**

(74) Representative: **Hesketh, Alan, Dr.
European Patent Department Merck & Co.,
Inc. Terlings Park Eastwick Road
Harlow Essex, CM20 2OR(GB)**

**Description**

This invention relates to a method of inhibiting scale formation and/or the formation of scale forming salts in boilers using a polymer admixture comprising polymers of different molecular weights. These synergistic polymer compositions are hydrothermally stable and provide improved threshold scale inhibition at elevated temperatures and pressures.

Certain types of water soluble polymers have been used in the past to fluidize precipitates, salts, or other solids which may be found in high temperature boiler water systems. For example, US-A-3,630,937, entitled "Boiler Water Treatment", discloses the use of water soluble sulfonated polystyrenes, alone or in combination with other boiler chemicals. US-A-2,783,200 discloses the use of certain polyacrylate compounds, and US-A-3,514,376 discloses the use of short chain polyacrylic acid (molecular weight:5,000-13,000), to prevent scale formation in boilers and evaporators, respectively. US-A-2,980,610 discloses the use of polyacrylamides for inhibiting the precipitation of calcium and other salts in boiler waters. Additionally, US-A-3,709,815 and 3,928,196 disclose the use of polymers containing sulfonic acid and carboxylic acid moieties as scale inhibitors for aqueous systems. FR-A-2 415 079 discloses the use of copolymers containing acrylate and acrylamide linkages. GB-A-1 440 403 describes the use of copolymers of (meth)-acrylic acid and acrylamide.

Most industrial waters contain alkaline earth metal cations, such as calcium, barium, magnesium, etc. and several anions such as bicarbonate, carbonate, sulfate, oxylate, phosphate, silicate, fluoride, etc. When combinations of these anions and cations are present in concentrations which exceed the solubility of their reaction products, precipitates form until these product solubility concentrations are no longer exceeded. For example, when the concentrations of calcium ion and carbonate ion exceed the solubility of calcium carbonate reaction products, a solid phase of calcium carbonate forms.

Solubility product concentrations are exceeded for various reasons, such as partial evaporation of the water phase, change of pH, pressure or temperature, and the introduction of additional ions which form insoluble compounds with the ions already present in solution. As these reaction products precipitate on surfaces of a water carrying system, they form scale or deposits. This accumulation prevents effective heat transfer, interfers with fluid flow, facilitates corrosive processes, and harbors bacteria. This scale is an expensive problem in many industrial applications, causing delays and shut downs for cleaning and removal.

The inventor has discovered that polymer blends comprising polymers of different molecular weights are synergistic with respect to both hydrothermal stability and threshold scale inhibition at elevated temperatures and pressures. The use of these novel polymer blends to treat boiler systems is unknown in the art.

DETAILED DESCRIPTION OF THE INVENTION:

The instant invention is directed to a method of inhibiting the precipitation of scale forming salts in an aqueous boiler system comprising adding to said boiler system 0.1 to 1000 mg/l of a composition comprising: a) a polymer having a molecular weight of 1,500 to 3,000, as determined by gel permeation chromatography (GPC), selected from the group of homopolymers of acrylic acid and salts of these polymers; and b) a polymer having a molecular weight of 7,000 to 15,000, as determined by GPC, selected from the group of polymers prepared using acrylic acid and methacrylic acid, alone or in combination with each other or with acrylamide and/or methacrylamide, and salts of these polymers; wherein the ratio of a):b) ranges from 95:5 to 5:95 by weight, and wherein the weight average molecular weight of said composition ranges from 4,000 to 7,000 preferably 4,000 to 6,000. Homopolymers of acrylamide and homopolymers of methacrylamide are not suitable for use in the instant polymer blends.

Additionally, the instant invention is directed to synergistic compositions for use as boiler scale inhibitors which comprise: a) a polymer having a molecular weight of 1,500 to 3,000, as determined by GPC, selected from the group of homopolymers of acrylic acid, and salts of these polymers; and b) a polymer having a molecular weight of 7,000 to 15,000, as determined by GPC, selected from the group of polymers prepared using acrylic acid and methacrylic acid, alone or in combination with each other or with acrylamide and/or methacrylamide, and salts of these polymers; wherein the ratio of a):b) ranges from 95:5 to 5:95 by weight, and wherein the weight average molecular weight of said composition ranges from 4,000 to 7,000, preferably 4,000 to 6,000.

Thus, the inventor has discovered that specific blends of polymers having relatively low and high molecular weights synergistically prevent boiler scaling and are synergistically more hydrothermally stable than the individual polymers comprising the admixtures. These blends are also superior to homogeneous polymers having the same molecular weight as the weight average molecular weight of the blended compositions.

For component (b), any polymer prepared using monomers selected from the group consisting of acrylic acid and methacrylic acid, alone or in combination with each other, or in combination with acrylamide and/or methacrylamide, or in combination with and salts of these polymers, can be used. Thus, homopolymers of acrylic acid, homopolymers of methacrylic acid, copolymers of acrylic acid and methacrylic acid, copolymers of acrylic acid and methacrylamide or acrylamide, hydrolyzed polyacrylamides, copolymers of methacrylic acid and methacrylamide or acrylamide, terpolymers of any of these monomers, and salts of these polymers can be used.

Preferably, components a) and b) are polymers prepared from the same monomer(s), differing only in weight average molecular weight. However, compositions which comprise high and low molecular weight combinations of different polymers can also be used.

For component (b), the preferred polymers for use in the instant compositions and method are homopolymers of acrylic acid and homopolymers of methacrylic acid, which are also referred to as polyacrylates and polymethacrylates, respectively. Homopolymers of acrylic acid are most preferred.

The polymer of component a) should have a molecular weight ranging from 1,500 to 3,000, as determined by GPC. Preferably, the molecular weight should range from 1,700 to 2,500. The polymer of component b) should have a molecular weight of 7,000 to 15,000, as determined by GPC, and the preferred molecular weight should be 8,000 to 10,000.

The weight ratio of a):b) should range from 95:5 to 5:95, more preferably from 75:25 to 25:75 and most preferably from 45:55 to 55:45. Also, the weight average molecular weight of the total composition should range from 4,000 to 7,000, preferably from 4,000 to 6,000.

The instant compositions are stable to about 350°C. Thus, they may be used in boilers which operate up to approximately 163.0 bar (2,350 psig). Preferably, these compositions are used in boilers which operate between 250 and 325°C, i.e. boilers which operate up to about 117.2 bar (1,700 psig).

A dosage from 0.1 to 1,000 mg/l, based on the aqueous system being treated, should be used. More preferably the dosage is 0.5 mg/l to 150 mg/l.

The key to this invention is that polymer blends which comprise polymers of low and high molecular weight are synergistically more thermally stable and better scale inhibitors than the individual polymers comprising the composition, or than a single, homogeneous polymer having a molecular weight similar to the weight average molecular weight of the polymer blend.

EXAMPLES:

The following examples demonstrate the instant invention in greater detail. These examples should not, however, be viewed as limiting the invention in any way.

Example 1

3.71 g polyacrylic acid (23.7% active; molecular weight, $Mw = 2,768$ as determined by GPC) were added to distilled water and 0.44 ml 10% aqueous $Na_3PO_4 \bullet 12H_2O$. This produced 220.0 g of a solution having a pH of 10.1 which contained 4,000 ppm polymer.

A 20 ml sample of the solution was obtained. The balance was poured into a 450 ml, glass-lined, 316 Stainless Steel Parr Reactor. Nitrogen gas at 0.69 bar (10 psi) was passed through the solution for 30 minutes to purge the system of air. The reactor was then sealed with 0.69 bar (10 psi) nitrogen in the head space.

The reactor was heated and reached 300°C and 88.3 bar (1280 psi) in 64 minutes. A 20 ml sample was withdrawn ("O" time) via a sampling tube designed to operate without lowering the temperature or pressure. Additional 20 ml samples were taken 1/2, 1, 1-1/2 and 2 hours after the "O" time sample was taken.

All samples were analyzed for polymeric carboxylic group content ($CA/CA_o$). This represents the fraction of carboxylic groups, based on the original carboxyl content. The method used was Calgon's Test No. 35-445-B, which is incorporated herein by reference. This test, which is available from Calgon, does not measure carboxyl groups of monomers or other low molecular weight materials.

The samples were also analyzed via gel permeation chromatography for surviving polymer mass ($m/m_o$). This represents the fractional mass, based on the original mass. GPC also provided the fractional molecular weight ($Mw/Mw_o$) based on the original molecular weight. Note that $Mw/Mw_o$ represents the fractional molecular weight of the surviving polymers. Thus, a polymer that has lost most of its mass can still show a high $Mw/Mw_o$.

3

The polymers were then evaluated for scale inhibiting properties. A test method entitled "Threshold Inhibition of Calcium Sulfate ($CaSO_4 \bullet 2H_2O$) Laboratory Screening Test" was used (at pH 7 and 60°C for 24 hours) to measure calcium sulfate inhibition. A test method entitled "Threshold Inhibition of Calcium Carbonate ($CaCO_3$) Laboratory Screening Test" was used (at pH 10 and 60°C for 24 hours) to measure calcium carbonate inhibition. These test methods are available from Calgon Corporation and are incorporated herein by reference.

The results of these tests are shown in Table 1.

Example 2

A 4,000 ppm solution at pH 10 was prepared, as in Example 1, using polyacrylic acid having a molecular weight (Mw) of 4,322. The system reached temperature in 63 minutes. Samples were withdrawn unheated and at 0,1/2, 2 and 4 hours.

These samples were tested and evaluated as in Example 1, with the results shown in Table 1.

Example 3

A 4,000 ppm solution was prepared, as in Example 2, using polyacrylic acid having a molecular weight (Mw) of 8,310. The system reached temperature in 59 minutes. Samples were taken at various intervals and tested as in Example 2, resulting in the data shown in Table 1.

Example 4

As in Example 3, but using poly acrylic acid having a molecular weight of 14,238, the system reached temperature in 66 minutes. Samples were taken and tested as in Example 2, resulting in the data shown in Table 1.

Example 5

The tests of Example 4 were repeated using a blend of 25 parts, on an active polymer basis, of polyacrylic acid having a molecular weight of 2,768 and 75 parts polyacrylic acid having a molecular weight (Mw) of 8,310. The system reached temperature in 61 minutes. Samples were taken before heating and after 2 hours and tested, resulting in the data shown in Table 1.

Example 6

This example repeated the tests of Example 5, using 50 parts (Mw = 2768) and 50 parts (Mw = 8310). The system reach temperature in 60 minutes, and samples were taken before heating and after 2 and 4 hours resulting in the data shown in Table 1.

Example 7

The tests of Example 2 were repeated, but the solution contained only 400 ppm polymer rather than 4,000 ppm. The results are shown in Table 1 for samples taken before heating, at T = O, and after 2 and 4 hours.

Example 8

The tests of Example 6 were repeated, but the solution contained only 400 ppm polymer rather than 4,000 ppm. The resulting data is shown in Table 1.

TABLE 1

| Example No. | Description | Sample Time (hours) | $CO_2$; 60°C; pH 10 | | | $SO_4$; 60°C; pH 7 | | $Mw/Mw_o$ | $m/m_o$ | $Ca/Ca_o$ |
|---|---|---|---|---|---|---|---|---|---|---|
| | | | @ 0.5 | @ 1.0 | @ 1.5 ppm | @ 2 | @ 4 ppm | | | |
| 1 | Polyacrylic Acid Mw = 2,768 4,000 ppm | Unheated | 76 | 97 | 100 | 35.2 | 97.6 | 1 | 1 | 1 |
| | | 0 | | 97 | 97 | | | 0.98 | 0.89 | 0.89 |
| | | 1/2 | 61 | 97 | 100 | | | 0.96 | 0.80 | 0.65 |
| | | 1 | | 97 | 100 | | | 0.96 | 0.76 | 0.65 |
| | | 1-1/2 | | 97 | 100 | | | 0.96 | 0.66 | 0.59 |
| | | 2 | | 100 | 100 | 32 | 94.3 | 0.95 | 0.68 | 0.53 |
| 2 | Polyacrylic Acid Mw = 4,322 4,000 ppm | Unheated | 75 | 96 | 96 | 27 | 95.5 | 1 | 1 | 1 |
| | | 0 | | 96 | 96 | | | 0.91 | 0.93 | 0.86 |
| | | 1/2 | 66 | 92 | 96 | | | 0.94 | 0.89 | 0.81 |
| | | 2 | | 96 | 96 | 32 | 55.9 | 0.91 | 0.89 | 0.81 |
| | | 4 | | 88 | 96 | | | 0.80 | 0.73 | 0.59 |
| 3 | Polyacrylic Acid Mw = 8,310 4,000 ppm | Unheated | 52 | 80 | | 20.5 | 74.6 | 1 | 1 | 1 |
| | | 0 | 63 | 92 | | | | 0.82 | 0.93 | 0.95 |
| | | 1/2 | 52 | 92 | | | | 0.83 | 0.89 | 0.95 |
| | | 2 | 58 | 86 | | 23.8 | 46.7 | 0.74 | 0.90 | 0.95 |
| | | 4 | 50 | 80 | | | | 0.65 | 0.80 | 0.81 |
| 4 | Polyacrylic Acid Mw = 14,238 4,000 ppm | Unheated | 46 | 71 | | 18 | 24 | 1 | 1 | 1 |
| | | 0 | 43 | 74 | | | | 0.69 | 0.83 | 0.88 |
| | | 1/2 | 49 | 74 | | | | 0.62 | 0.92 | 0.91 |
| | | 2 | 51 | 69 | | 13 | 13 | 0.54 | 0.84 | 0.89 |
| | | 4 | 51 | 77 | | | | 0.44 | 0.76 | 0.79 |
| 5 | Polyacrylic Acid Blend: 25 parts Mw=2768 75 parts Mw=8310 4,000 ppm Avg. Mw=6925 | Unheated 2 | 59 69 | 69 90 | | 20 20 | 75 98 | | | 1 0.73 |
| 6 | Polyacrylic Acid Blend: 50 parts Mw=2768 50 parts Mw=8310 4,000 ppm Avg. Mw=5539 | Unheated 2 4 | 59 66 62 | 97 100 97 | | 38 40 42 | 100 100 100 | | | 1 0.87 0.80 |
| 7 | Polyacrylic Acid Mw=4,322 400 ppm | Unheated 0 2 4 | 74 79 68 32 | | | 65 33 30 12 | 100 100 100 37 | | | 1 0.86 0.65 0.43 |
| 8 | Polyacrylic Acid Blend: 50 parts Mw=2768 50 parts Mw=8310 400 ppm Avg. Mw=5539 | Unheated 0 2 4 | 87 97 73 87 | 93 90 | | 29 36 34 24 | 98 97 100 98 | | | 1 0.94 0.74 0.59 |

Examples 1-8 - Discussion of Data

Examples 1-4

These examples show that carboxyl group and polymer mass stability after 2 hours increased with initial molecular weight, peaking at $Mw_o$ = 8,300.

The molecular weight of polymer surviving after 2 hours decreases with increasing initial molecular weight.

Polymers exposed to 300°C and 88.3 bar (1280 psi) for 2 hours and then tested at 1 ppm show consistently decreasing effectiveness as threshold inhibitors of calcium carbonate precipitation, and a drastic reduction at 2 and 4 ppm in effectiveness as calcium sulfate inhibitors, as the initial molecular weight of the polymers increases. Thus, while stability increased with polymer molecular weight, efficacy decreases.

Example 5

Example 5 shows that blending the polymers of Example 1 and Example 3, at a weight ratio of 25 parts to 75 parts, respectively, leads to decreased stability and less than optimal efficacy.

Example 6

Example 6 shows that blending of the two polymers used in Example 5, but at a weight ratio of 50 parts

5

to 50 parts, leads to improved stability and improved efficacy.

Example 7 and 8

Examples 7 and 8 substantiate the finding of Example 6. When the polymers are exposed to elevated temperatures and pressures at 400 ppm rather than 4,000 ppm, there is a threefold improvement in efficacy of Example 8 over Example 7.

**Claims**

1.  A method of inhibiting the precipitation of scale forming salts in an aqueous boiler system comprising adding to said boiler system 0.1 to 1000 mg/l of a composition comprising: a) a polymer having a molecular weight of 1,500 to 3,000, as determined by gel permeation chromatography, selected from the group of homopolymers of acrylic acid and salts of these polymers; and b) a polymer having a molecular weight of 7,000 to 15,000, as determined by gel permeation chromotography, selected from the group of polymers prepared using acrylic acid and methacrylic acid, alone or in combination with each other or with acrylamide and/or methacrylamide, and salts of these polymers; wherein the ratio of a): b) ranges from 95:5 to 5:95 by weight, and wherein the weight average molecular weight of said composition ranges from 4,000 to 7,000.

2.  The method of Claim 1, wherein the ratio of a):b) ranges from 75:25 to 25:75, by weight, and wherein the weight average molecular weight of said composition ranges from 4,000 to 6,000.

3.  A composition for use as a boiler scale inhibitor which comprises: a) a polymer having a molecular weight of 1,500 to 3,000 as determined by gel permeation chromatography, selected from the group of homopolymers of acrylic acid, and salts of these polymers; and b) a polymer having a molecular weight of 7,000 to 15,000 as determined by gel permeation chromatography, selected from the group of polymers prepared using acrylic acid and methacrylic acid, alone or in combination with each other or with acrylamide and/or methacrylamide, and salts of these polymers; wherein the ratio of a):b) ranges from 95:5 to 5:95 by weight, and wherein the weight average molecular weight of said compositions ranges from 4,000 to 7,000.

4.  The composition of Claim 3, wherein the ratio of a):b) ranges from 75:25 to 25:75, by weight, and wherein the weight average molecular weight of said composition ranges from 4,000 to 6,000.

**Revendications**

1.  Procédé d'inhibition de la précipitation des sels formant du tartre, dans un système de chaudière à eau, qui comprend l'addition audit système de chaudière, de 0,1 à 1000 mg/l d'une composition comprenant : a) un polymère ayant une masse moléculaire de 1500 à 3000, telle que déterminée par chromatographie par perméation de gel, choisi dans le groupe des homopolymères de l'acide acrylique et des sels de ces polymères ; et b) un polymère ayant une masse moléculaire de 7000 à 15000, telle que déterminée par chromatographie par perméation de gel, choisi dans le groupe des polymères préparés à l'aide de l'acide acrylique et de l'acide méthacrylique, seuls ou en combinaison l'un avec l'autre ou avec l'acrylamide et/ou le méthacrylamide, et des sels de ces polymères ; dans lequel le rapport de a) : b) est compris entre 95 : 5 et 5 : 95 en poids, et dans lequel la masse moléculaire moyenne en poids de ladite composition s'échelonne de 4000 à 7000.

2.  Procédé selon la revendication 1, dans lequel le rapport de a) : b) est compris entre 75 : 25 et 25 : 75, en poids, et dans lequel la masse moléculaire moyenne en poids de ladite composition s'échelonne de 4000 à 6000.

3.  Composition à utiliser comme inhibiteur de tartre dans une chaudière qui comprend : a) un polymère ayant une masse moléculaire de 1500 à 3000, telle que déterminée par chromatographie par perméation de gel, choisi dans le groupe des homopolymères de l'acide acrylique et des sels de ces polymères ; et b) un polymère ayant une masse moléculaire de 7000 à 15000, telle que déterminée par chromatographie par perméation de gel, choisi dans le groupe des polymères préparés à l'aide de l'acide acrylique et de l'acide méthacrylique, seuls ou en combinaison l'un avec l'autre ou avec l'acrylamide et/ou le méthacrylamide, et des sels de ces polymères ; dans laquelle le rapport de a) : b) est compris entre 95 : 5 et 5 : 95 en poids, et dans laquelle la masse moléculaire moyenne en poids desdites compositions s'échelonne de 4000 à 7000.

4. Composition selon la revendication 3, dans laquelle le rapport de a) : b) est compris entre 75 : 25 et 25 : 75, en poids, et dans laquelle la masse moléculaire moyenne en poids de ladite composition s'échelonne de 4000 à 6000.

**Patentansprüche**

1. Verfahren zur Inhibierung der Ausfällung von kesselsteinbildenden Salzen in einem wäßrigen Boilersystem durch Zugabe, zu dem Boilersystems, von 0,1 bis 1000 mg/l einer Zusammensetzung, welche a) ein Polymer mit einem Molekulargewicht von 1500 bis 3000, bestimmt durch Gelpermeationschromatografie und ausgewählt aus der Gruppe der Homopolymere von Acrylsäure und Salzen dieser Polymere sowie b) ein Polymer mit einem Molekulargewicht von 7000 bis 15000, bestimmt durch Gelpermeationschromatografie und ausgewählt aus der Gruppe der Polymere, die unter Verwendung von Acrylsäure und Methacrylsäure allein oder in Kombination miteinander oder mit Acrylamid und/oder Methacrylamid und aus Salzen dieser Polymere hergestellt sind, umfaßt, wobei das Verhältnis von a):b) im Bereich von 95:5 bis 5:95 nach Gewicht liegt und worin das Gewichtsmittel-Molekulargewicht der Zusammensetzung im Bereich von 4000 bis 7000 liegt.

2. Verfahren nach Anspruch 1, worin das Verhältnis von a):b) im Bereich von 75:25 bis 25:75, nach Gewicht, liegt und worin das Gewichtsmittel-Molekulargewicht der Zusammensetzung im Bereich von 4000 bis 6000 liegt.

3. Zusammensetzung zur Verwendung als Kesselsteininhibitor in einem Boiler, welche a) ein Polymer mit einem Molekulargewicht von 1500 bis 3000, bestimmt durch Gelpermeationschromatografie und ausgewählt aus der Gruppe der Homopolymere von Acrylsäure sowie Salzen dieser Polymere und b) ein Polymer mit einem Molekulargewicht von 7000 bis 15000, bestimmt durch Gelpermeationschromatografie und ausgewählt aus der Gruppe der Polymere, die unter Verwendung von Acrylsäure und Methacrylsäure, allein oder in Kombination miteinander oder mit Acrylamid und/oder Methacrylamid sowie aus Salzen dieser Polymere hergestellt sind, umfaßt, wobei das Verhältnis von a):b) im Bereich von 95:5 bis 5:95 nach Gewicht, liegt und worin das Gewichtsmittel-Molekulargewicht der Zusammensetzung im Bereich von 4000 bis 7000 liegt.

4. Zusammensetzung nach Anspruch 3, worin das Verhältnis von a):b) im Bereich von 75:25 bis 25:75, nach Gewicht, liegt und woran das Gewichtsmittel-Molekulargewicht der Zusammensetzung im Bereich von 4000 bis 6000 liegt.